# EUROPÄISCHE PATENTSCHRIFT

(11) **EP 0 784 644 B1**
(45) Veröffentlichungstag und Bekanntmachung des Hinweises auf die Patenterteilung: **09.06.1999**
(21) Anmeldenummer: 95936453.0
(22) Anmeldetag: 06.10.1995
(51) Int. Cl.: C08G 65/30, C08G 63/90, C07C 41/34

(54) **VERFAHREN ZUR REINIGUNG VON POLYETHERN, POLYESTERN UND POLYETHERESTERN**
POLYETHER, POLYESTER AND POLYETHER ESTER PURIFICATION PROCESS
PROCEDE D'EPURATION DE POLYETHERS, POLYESTERS ET ESTERS DE POLYETHER

(30) Priorität: 07.10.1994 DE 4435930; 20.02.1995 DE 19505705
(43) Veröffentlichungstag der Anmeldung: 23.07.1997
(73) Patentinhaber: BASF AKTIENGESELLSCHAFT, 67056 Ludwigshafen (DE)
(72) Erfinder: WEYER, Hans-Jürgen, D-67240 Bobenheim-Roxheim (DE); FISCHER, Rolf, D-69121 Heidelberg (DE)
(74) Vertreter: Isenbruck, Günter, Dr.
(86) Internationale Anmeldenummer: EP9503957
(87) Internationale Veröffentlichungsnummer: WO9611223

(56) Entgegenhaltungen:
- EP-A- 0 370 705
- US-A- 3 205 269
- DATABASE WPI Derwent Publications Ltd., London, GB; AN 93-131334(16) & JP,A,5 070 538 (TORAY IND INC) 23. März 1993

## Beschreibung

Die Erfindung betrifft ein Verfahren zur Reinigung von Heteropolyverbindungen enthaltenden Polyethern, Polyestern und/oder Polyetherestern oder deren Lösungen durch Mischen derselben mit einer Verbindung, die mindestens ein Heteroatom enthält, das als Zentralatom einer Heteropolyverbindung vorliegen kann, nicht-protisch und von so geringer Polarität ist, daß ihre Zugabe zur Abscheidung der Heteropolyverbindung in einer gesonderten Phase führt.

Polyether, Polyester und Polyetherester werden vielseitig verwendet, beispielhaft sei hier deren Verwendung in Hydraulikölen oder als Diolkomponente bei der Herstellung von Polyurethanen genannt. Diese Verbindungen werden durch kationische Polymerisation oder Copolymerisation entsprechender Monomere, wie cyclischer Ether, Acetale, Polyalkohole oder Lactone, mit Hilfe von Brönsted- oder Lewis-Säure-Katalysatoren hergestellt. Als besonders vorteilhafte Katalysatoren für eine Ringöffnungspolymerisation haben sich Heteropolysäuren und Heteropolysäuresalze, im folgenden gemeinsam als "Heteropolyverbindung(en)" oder "HPA" bezeichnet, erwiesen. Zur Einstellung der gewünschten Polymermolmasse und/oder zur Herstellung spezieller, endgruppenmodifizierter Derivate sind bei der Polymerisation üblicherweise Substanzen anwesend, deren Einbau direkt oder indirekt zum Kettenabbruch führt. Dies sind z.B. Carbonsäurederivate, Alkohole oder Wasser.

JP-A-83 028/1983 beschreibt beispielsweise die Polymerisation von Tetrahydrofuran (THF) in Gegenwart eines Carbonsäureanhydrids oder -halogenids unter Bildung von PolyTHF-Diestern, wobei einer Heteropolysäure als Katalysator benutzt wird.

EP 126 471 lehrt die HPA-katalysierte Polymerisation von THF und die Copolymerisation von THF mit verschiedenen anderen cyclischen Ethern in Gegenwart von Wasser unter Bildung von Polyetherglykolen. In EP 158 229 wird die Herstellung von Polyetherglykolen durch Copolymerisation cyclischer Ether mit di- und höherfunktionellen Alkoholen beschrieben.

Nach JP 61-200120 können Lactone oder Lactone zusammen mit cyclischen Ethern in Gegenwart von Hydroxylgruppen-haltigen Verbindungen mit Heteropolysäuren als Katalysatoren polymerisiert werden.

Polyetherglykolmonoether und Polyetherglykolmonoester lassen sich nach EP 503 393 und EP 503 394 durch Polymerisation cyclischer Ether in Gegenwart von Monoalkoholen oder Monocarbonsäuren mit HPA-Katalysatoren herstellen.

Bei diesen Polymerisationsverfahren zur Herstellung von Polyethern, Polyestern und Polyetherestern entstehen Polymerphasen, die aufgrund des unvollständigen Umsatzes noch verbleibende Mengen an Monomer(en), verbleibende Mengen der zum Kettenabbruch führenden Verbindung(en), gegebenenfalls eingesetzte Lösungsmittel sowie gelöste Heteropolyverbindungen(en) enthalten. Der Prozentsatz an in der Polymerphase gelöstem HPA-Katalysator ist bei diesen Reaktionen beträchtlich und kann bis zu 1 Gew.-% und mehr, bezogen auf die Polymerphase, betragen. Der gelöste Katalysator fällt bei einer Abtrennung, die lediglich aus einem Abdestillieren von unumgesetztem Monomer, Kettenabbruchsreagenz(ien) und gegebenenfalls eingesetztem Lösungsmittel aus dieser Phase besteht, nicht aus, sondern verbleibt in gelöster Form im Polymer. Einerseits muß dies aus Qualitätsgründen verhindert werden, andererseits ist es aus Kostengründen, da Heteropolysäuren sehr teuer sind, wünschenswert, den größten Teil des Katalysators wiederzugewinnen.

Weiter ist bekannt, daß sich Heteropolyverbindungen im Laufe der Zeit und verstärkt bei thermischer Belastung zersetzen. Dies geschieht vor allem durch Hydrolyse unter Bildung der entsprechenden Oxide. Die Zersetzung von Heteropolyverbindungen kann verringert oder ganz verhindert werden, wenn man Verbindungen zusetzt, die Elemente enthalten, welche als Zentralatome in Heteropolyverbindungen auftreten können. Beispielsweise ist die Hydrolysestabilität von Phosphorpolysäuren in Gegenwart von Phosphorsäure deutlich vergrößert (A. Aoshima, S. Yamamatsu, T. Yamaguchi, Nippon Kagaku Kaishi, (1990) 233). Unter reduzierenden Bedingungen ist die Hydrolysestabilität von HPA ebenfalls erhöht (M. T. Pope, E. Papaconstantinou, Inorg. Chem. 6 (1967) 1147).

Zur Lösung des Problems der Abtrennung von Heteropolyverbindungen wird in EP 181 621 vorgeschlagen, die Polymerphase mit einem Kohlenwasserstoff oder halogenierten Kohlenwasserstoff zu versetzen, wodurch der größte Teil der gelösten Heteropolysäure ausfällt und/oder als gesonderte Phase abgeschieden wird. Die abgetrennte Kohlenwasserstoff/ Polymer-Phase wird anschließend mit einem festen Adsorbens behandelt. Eine Stabilisierung der Heteropolyverbindungen wird durch das Ausfällen mit einem (ggf. halogenierten) Kohlenwasserstoff in diesem Verfahren jedoch nicht erreicht.

In SU 1754732 A1 wird nach Konzentration der Polymerphase auf 50 - 90% Polymer ebenfalls ein Kohlenwasserstoff mit 1 - 15 C-Atomen zur Ausfällung der Heteropolyverbindung zugesetzt. Anstelle einer weiteren Reinigung durch Adsorption wird dann jedoch eine flüssige organische Stickstoffbase zugesetzt, die mit noch vorhandener Heteropolyverbindung, bei der es sich in diesem Fall um die Säure handeln muß, ein unlösliches Salz bildet, das ausfällt und auf übliche Weise abgetrennt werden kann. Die somit zu erzielende Reinheit von ca. 50 x 10⁻⁶% Heteropolyverbindung im Polymer ist jedoch für die meisten Zwecke nicht ausreichend.

Aufgabe der vorliegenden Erfindung war es demgemäß, ein Verfahren zur Reinigung von Heteropolyverbindungen enthaltenden Polyethern, Polyestern und Polyetherestern oder Lösungen derselben zu schaffen, das die Heteropolyverbindungen abtrennen und gleichzeitig zur Stabilisierung der eingesetzten HPA dienen kann.

Diese Aufgabe wird durch ein Verfahren zur Entfernung von Heteropolysäuren und Heteropolysäuresalzen (Heteropolyverbindungen) aus mit Heteropolyverbindungen verunreinigten Polyethern, Polyestern und/oder Polyetherestern, gelöst, in dem diese Polymere oder eine Lösung derselben mit einer Verbindung gemischt werden, die mindestens ein Heteroelement enthält, das aus der Gruppe von Zentralatomen von Heteropolysäuren ausgewählt ist, einen pKs-Wert von mindestens 20 aufweist (nicht-protisch ist) und von so geringer Polarität ist, daß ihre Zugabe zur Ausfällung der Heteropolyverbindung führt.

Nach dem erfindungsgemäßen Verfahren können Polyether, Polyester und /oder Polyetherester von Heteropolyverbindung(en) gereinigt werden. Dabei kann das beschriebene Reinigungsverfahren für jedes Gemisch, das HPA und einem oder mehrere derartiger Polymere enthält, eingesetzt werden.

Die genannten polymeren Verbindungen können beispielsweise aus Monomeren der Gruppe der cyclischen Ether, Acetale, Diole, höheren Alkohole und Lactone aufgebaut sein. Es ist aber auch möglich, aus anderen Monomeren bestehende polymere Verbindungen nach dem erfindungsgemäßen Verfahren von gelösten Heteropolyverbindungen zu befreien. Die Molmasse der zu reinigenden Polyether, Polyester und/oder Polyetherester ist nicht beschränkt, liegt aber bevorzugt unter 5000.

Man setzt die Heteropolyverbindung(en) enthaltenden Polyether, Polyester und/oder Polyetherester als solche oder in gelöster Form, beispielsweise und bevorzugt in ihrer bei der Polymerisation anfallenden Lösung, ein. In dieser Beschreibung und den Ansprüchen wird als "Polymerphase" oder "(Polymer)gemisch" eine Phase bezeichnet, die mindestens eines der obigen Polymere enthält, während als "Polymerlösung" eine Phase bezeichnet wird, die noch zusätzlich eine als Lösungsmittel wirkende niedermolekulare organische Komponente enthält.

Das Polymerisationsverfahren selbst spielt für die erfindungsgemäße Reinigung von Polyethern, Polyestern und/oder Polyetherestern keine besondere Rolle. Die Polymerisation kann kontinuierlich oder diskontinuierlich durchgeführt werden, und das Polymerisationssystem kann einphasig, zweiphasig oder heterogen sein.

In der Regel enthält die bei der Polymerisation gebildete Polymerlösung noch einen beträchtlichen Anteil an Monomer(en), einen großen Teil der anfangs zugesetzten Kettenabbruchsreagenz(ien) sowie gelöste Heteropolyverbindung(en). Da es vorteilhaft sein kann, die Polymerisation in Gegenwart eines Lösungsmittels durchzuführen, kann das Polymerisationssystem gegebenenfalls auch ein solches enthalten.

In einem bevorzugten Polymerisationsverfahren mit HPA-Katalyse wird so gearbeitet, daß ein Polymerisationsgemisch mit zwei flüssigen Phasen entsteht, wobei die eine die Katalysatorphase und die andere die Monomer/Polymer-Phase ist. Eine typische Monomer-/Polymer-Phase, wie sie beispielsweise bei der Ringöffnungspolymerisation von THF zu Polytetrahydrofuran (PolyTHF) in Gegenwart von Wasser mit H₃PW₁₂O₄₀ als Katalysator in einem zweiphasigen Polymerisationssystem entsteht, ist wie folgt zusammengesetzt (Angaben in Gew.-%): 77,3% THF, 21,2% PolyTHF, 1,2% H₃PW₁₂O₄₀, 0,3% Wasser.

Die Zusammensetzung der Polymerphase, die für das erfindungsgemäße Verfahren verwendet wird, hängt demgemäß von der Art des Katalysators, des bzw. der Monomeren, des oder der Kettenabbruchsreagenz(ien) und dem Gehalt von möglicherweise verwendetem Lösungsmittel ab und ist für das Verfahren nicht kritisch.

Nach dem erfindungsgemäßen Verfahren werden zur Reinigung der HPA-haltigen Polymeren Verbindungen zugesetzt, die mindestens ein Heteroatom enthalten, das als Zentralatom in Heteropolyverbindungen auftreten kann, nicht-protisch sind und von so geringer Polarität sind, daß ihre Zugabe zur Ausfällung der gelösten Heteropolyverbindung(en) führt.

Unter Heteropolysäuren im Sinne der vorliegenden Erfindung werden anorganische Polysäuren mit mindestens zwei verschiedenen Zentralatomen verstanden, welche aus schwachen, mehrbasigen Sauerstoffsäuren eines Metalls, vorzugsweise aus denen des Chroms, Molybdäns, Vanadiums und Wolframs, und/oder den entsprechenden Oxiden dieser Metalle, beispielsweise CrO₃, MoO₃, V₂O₅ oder WO₃, und denen eines anderen Metalls oder Nichtmetalls, beispielsweise Arsen, Bor, Iod, Phosphor, Selen, Silicium, Germanium oder Tellur, als gemischte, partielle Anhydride entstehen. In der Regel hat das Atomverhältnis zwischen den erstgenannten und den letztgenannten Elementen in diesen Heteropolysäuren den Wert 2,5 bis 12, vorzugsweise beträgt das Atomverhältnis 9 oder 12.

Als Beispiele für Heteropolysäuren, wie sie im erfindungsgemäßen Verfahren entfernt werden können, seien die folgenden Verbindungen genannt:
Dodecamolybdatophosphorsäure (H₃PMo₁₂O₄₀ x nH₂O),
Dodecamolybdatokieselsäure (H₄SiMo₁₂O₄₀ x nH₂O),
Dodecamolybdatocer(IV)säure (H₈CeMo₁₀O₄₂ x nH₂O),
Dodecamolybdatoarsen(V)säure (H₃AsMo₁₀O₄₀ x nH₂O),
Hexamolybdatochrom(III)säure (H₃CrMo₆O₂₄H₆ x nH₂O),
Hexamolybdatonickel(II)säure (H₄NiMo₆O₂₄H₆ x 5H₂O),
Hexamolybdatoiodsäure (H₅IMo₆O₂₄ x nH₂O),
Octadecamolybdatodiphosphorsäure (H₆P₂Mo₁₈O₆₂ x 11H₂O),
Octadecamolybdatodiarsen(V)säure (H₆As₂Mo₁₈O₆₂ x 25H₂O),
Nonamolybdatomangan(IV)säure (H₆MnMo₉O₃₂ x nH₂O),
Undecamolybdatovanadatophosphorsäure (H₄PMo₁₁VO₄₀ x nH₂O),
Decamolybdatodivanadatophosphorsäure (H₅PMo₁₀V₂O₄₀ x nH₂O),
Dodecavanadatophosphorsäure (H₇PV₁₂O₃₆ x nH₂O),
Dodecawolframatokieselsäure (H₄SiW₁₂O_{4O} x 7H₂O),
Dodecawolframatophosphorsäure (H₃PW₁₂O₄₀ x nH₂O),
Dodecawolframatoborsäure (H₅BW₁₂O₄₀ x nH₂O),
Octadecawolframatodiphosphorsäure (H₆P₂W₁₈O₆₂ x 14H₂O),
Octadecawolframatodiarsen(V)säure (H₆As₂W₁₈O₆₂ x 14H₂O),
Hexamolybdatohexawolframatophosphorsäure (H₃PMo₆W₆O₄₀ x nH₂O).

Selbstverständlich können auch Mischungen von Heteropolysäuren entfernt werden. Häufig dient das erfindungsgemäße Verfahren zur Entfernung von Dodecawolframatophosphorsäure, Dodecawolframatokieselsäure und/oder Dodecamolybdatokieselsäure, da diese aufgrund ihrer guten Verfügbarkeit bevorzugt als Katalysatoren eingesetzt werden.

Das erfindungsgemäße Verfahren wird besonders bevorzugt für die Reinigung von Polymeren verwendet, bei deren Herstellungsverfahren die freien Heteropolysäuren als Katalysatoren eingesetzt worden sind. Aber auch die Abtrennung von Alkali- und/oder Erdalkalimetallsalzen von Heteropolysäuren ist möglich.

Die Heteroatome der zur Entfernung von Heteropolyverbindungen eingesetzten Verbindung gemäß Anspruch 1 können demgemäß Haupt- und Nebengruppenelemente des Periodensystems der Elemente sein. Beispiele für Hauptgruppen-Heteroelemente sind Bor, Silicium, Germanium, Zinn, Phosphor, Arsen, Antimon, Selen und Tellur. Beispiele für Nebengruppen-Heteroelemente sind Cer, Vanadin, Chrom, Molybdän, Wolfram, Mangan und Nickel.

Unter "nicht-protisch" wird in dieser Erfindung eine Verbindung verstanden, deren pKs ≥ 20 ist.

Durch die Wahl geeigneter Substituenten kann die zur HPA-Ausfällung dienende Verbindung optimal auf das zu reinigende Polymer oder dessen Lösung abgestimmt werden. Weiter werden zu einer zusätzlichen Erhöhung der Hydrolysestabilität Verbindungen bevorzugt, die reduzierend wirken, d. h. die selbst oxidiert werden können. Dies sind Verbindungen, in denen das Heteroelement nicht in der höchsten Oxidationsstufe vorliegt.

Beispiele für im erfindungsgemäßen Verfahren verwendete HeteroelementVerbindungen sind: Phosphorigsäureester, wie Phosphorigsäuretriethylester, Phosphonsäureester, wie Methanphosphonsäuredimethylester, Phosphane, wie Tributylphosphan, Phosphinoxide, wie Tributylphosphinoxid, Silane, wie Tetramethylsilan, Triisopropylchlorsilan, Methoxytrimethylsilan oder Tetrabutoxysilan, Heteroelement-haltige Ether wie Bis(trimethylsilyl)ether, Borane, wie Trisboran, oder Tetraalkylzinnverbindungen, wie Tetrabutylzinn.

Die in diesen Verbindungen enthaltenen Heteroelemente sind bevorzugt solche, die in den jeweils eingesetzten HPA-Katalysatoren vorhanden sind, z. B. Phosphor in Phosphorigsäuretriethylester als zur Ausfällung verwendete Heteroelementverbindung und in Dodecamolybdatophosphorsäure als Katalysator. Es können aber auch Verbindungen eingesetzt werden, deren Heteroelement von dem in der verwendeten HPA abweicht, beispielsweise Silicium in Tetramethylsilan als zur Ausfällung verwendete Heteroelementverbindung unter Verwendung von Dodecawolframatophosphorsäure als Katalysator.

Zur Vereinfachung des erfindungsgemäßen Verfahrens werden zur Ausfällung bevorzugt Heteroelementverbindungen eingesetzt, die bei Raumtemperatur flüssig sind. Weiter sollten die Heteroelementverbindungen unter den Reaktionsbedingungen vorteilhafterweise stabil sein.

Die Gewichtsmenge der einzusetzenden Heteroelementverbindung hängt vom HPA-Gehalt und dem Gehalt anderer niedermolekularer Verbindungen, wie Monomer(en), Kettenabbruchsreagenz(ien), Lösungsmittel usw. in der zu reinigenden Polymerphase ab, beträgt aber normalerweise mindestens halb so viel, häufig ebensoviel bis doppelt so viel wie die Gesamtgewichtsmenge der anderen niedermolekularen Verbindungen. Bezogen auf die Polyether-, Polyester- und/oder Polyetherestermenge sollte die Menge an Heteroelementverbindung im allgemeinen 50 Gew.-% oder mehr, bevorzugt 100 Gew.-% oder mehr, betragen.

Liegen große Mengen niedermolekulare Verbindungen zusammen mit dem zu reinigenden Polymer vor, müßten zum Ausfällen der HPA ebenfalls große Mengen an Heteroelementverbindung zugegeben werden. Es kann deshalb günstig sein, eine Polymer-haltige Mischung vor Zugabe der zur Ausfällung verwendeten Heteroelementverbindung bis zu einem Polymeranteil von mindestens 10 oder bevorzugt mindestens 50 Gew.-% und mehr zu konzentrieren.

Bei der erfindungsgemäßen Zugabe der Heteroelementverbindung fällt der größte Teil der in der Polymerphase gelösten HPA aus. Dabei kann es vorteilhaft sein, die Polymerphase auf geeignete Weise, beispielsweise durch herkömmliches Rühren, zu durchmischen. Für die HPA-Entfernung werden Temperaturen und Drücke gewählt, bei denen sich das Verfahren einfach durchführen läßt. Die verwendeten Temperaturen sollten nicht zu hoch sein, da die Löslichkeit der HPA in der Polymerphase mit zunehmender Temperatur steigt; normalerweise werden Temperaturen zwischen 25 und 60 °C gewählt. Die Mischung kann zur Vervollständigung der Fällung 0,1 bis 200 Stunden stehen bleiben, wobei üblicherweise 0,5 Stunden ausreichen. Häufig wird die Bildung von Emulsionen beobachtet. In diesem Fall kann die Phasentrennung durch geeignete Maßnahmen (wie Einsatz von Koaleszierfilten) beschleunigt werden.

Durch das erfindungsgemäße Verfahren gelingt die Abtrennung des größten Teils der in der Polyether-, Polyester- und/oder Polyetherester-Phase gelösten HPA. Die HPA fällt meistens in flüssiger Phase an, die direkt in die Polymerisationsstufe zurückgeführt werden kann.

Wird beispielsweise die oben erwähnte, bei der THF-Polymerisation in Gegenwart von Wasser und H₃PW₁₂O₄₀ als Katalysator erhaltene THF/PolyTHF-Phase mit der halben Gewichtsmenge an Tetramethylsilan versetzt, scheidet sich der größte Teil der gelösten HPA in Form einer flüssigen Phase ab. Der HPA-Restgehalt in der THF/PolyTHF/Tetramethylsilan-Phase sinkt dabei auf 5 ppm.

Die bei der HPA-Ausfällung durch Zugabe der Heteroelementverbindung ablaufenden Vorgänge sind noch nicht in allen Einzelheiten aufgeklärt. Eine mögliche Wirkungsweise könnte sein, daß die Zugabe der heteroatomaren Komponente die Löslichkeit von Heteropolyverbindungen in der Polymerphase durch Verringerung der Polarität derselben stark herabsetzt, so daß diese aus der Polymerphase ausfallen.

Polyether, Polyester und Polyetherester mit einem wie vorstehend beschrieben verringerten HPA-Gehalt können durch Inkontaktbringen mit einem festen Adsorbens weiter gereinigt werden. Dabei können diese Polymere direkt oder in Lösung mit dem festen Adsorbens behandelt werden. Bevorzugt ist der Einsatz von gegebenenfalls noch lösungsmittelhaltigen Monomer/Polymer-Mischungen. Dabei können diese Mischungen, so wie sie bei der HPA-Ausfällung anfallen, aber auch in konzentrierterer oder verdünnter Form eingesetzt werden. Die in der Polymerphase vorteilhafterweise enthaltene Monomermenge sollte mindestens 10 Gew.-%, besser 50 Gew.-% und mehr, betragen.

Die Art des festen Adsorbens ist nicht beschränkt, solange es Heteropolyverbindungen adsorbieren kann. Bevorzugt sind Aktivkohlen, Aluminiumoxide, Oxide, Hydroxide und Carbonate von Erdalkali- und Seltenerdmetallen sowie basische Ionenaustauscher. Die Menge des Adsorbens hängt vom HPA-Gehalt ab und kann das 2- bis 5000fache, bevorzugt das 10- bis 1000fache, an gelöster HPA betragen. Im allgemeinen führt der Einsatz größerer Mengen an festem Adsorbens zu einem geringeren HPA-Restgehalt nach der Behandlung.

Die Temperatur bei diesem Reinigungsschritt ist nicht besonders beschränkt und sollte so gewählt werden, daß die zu behandelnde Lösung eine geeignete Viskosität aufweist. Wird ein Polyether mit mittlerer Molmasse 1000 in reiner Form eingesetzt, liegt die geeignete Temperatur normalerweise zwischen 20 und 150 °C, bevorzugt zwischen 30 und 100 °C.

Wenn das gereinigte Polymer nach der Behandlung mit einem festen Adsorbens noch Monomer oder Lösungsmittel enthält, können diese beispielsweise durch Destillation bei Normaldruck oder unter vermindertem Druck entfernt werden, wobei ein Polymer mit sehr geringem HPA-Gehalt erhalten werden kann, der unter 1 ppm, bezogen auf reinen Polyether, Polyester und /oder Polyetherester, liegen kann. Demgemäß können nach dem erfindungsgemäßen Verfahren Polyether, Polyester und/oder Polyetherester auf wirtschaftliche Weise in hoher Reinheit erhalten werden.

Alle Konzentrationsangaben der folgenden erläuternden Beispiele sind in Gew.-% angegeben. Die Versuche wurden alle unter Stickstoff durchgeführt. Die quantitative Analyse der Heteropolysäuren wurde mittels Röntgenfluoreszenz und Atomabsorption durchgeführt.

### Beispiel 1

Es wurde eine bei der Polymerisation von Tetrahydrofuran (THF) zu Polytetrahydrofuran (PolyTHF) in Gegenwart von Wasser mit H₃PW₁₂O₄₀ als Katalysator anfallende Polymerphase eingesetzt, die die folgende Zusammensetzung aufwies: THF (77,3%), PolyTHF (21,2%), H₃PW₁₂O₄₀ (1,2%), Wasser (0,3%).

100 g dieser Mischung wurden mit 200 g Phosphorigsäuretriethylester versetzt. Nach 30 Stunden war der größte Teil der vorher gelösten H₃PW₁₂O₄₀ in Form einer flüssigen Mischung ausgefallen und konnte abgetrennt werden. Die THF/PolyTHF/Phosphorigsäuretriethylester-Phase wies noch einen Restgehalt von 200 ppm H₃PW₁₂O₄₀ auf. Anschließend wurde die organische Phase mit 20 g Aktivkohle (Merck) versetzt und 4 Stunden bei Raumtemperatur geschüttelt. Im nach Abtrennung der Aktivkohle und Einengung im Vakuum erhaltenen PolyTHF lag der H₃PW₁₂O₄₀-Gehalt in allen Fällen unter 1 ppm.

### Beispiel 2

Es wurde eine bei der Polymerisation von Caprolacton zu Polycaprolacton in Gegenwart von Wasser mit H₃PW₁₂O₄₀ als Katalysator anfallende Polymerphase eingesetzt, die die folgende Zusammensetzung aufwies: Polycaprolacton (98,2%), H₃PW₁₂O₄₀ (1,8%).

100 g dieser Mischung wurden mit 200 g Phosphorigsäuretriethylester versetzt. Nach 30 Stunden war der größte Teil der vorher gelösten H₃PW₁₂O₄₀ in Form einer flüssigen Mischung ausgefallen und konnte abgetrennt werden. Die THF/Polycaprolacton/Phosphorigsäuretriethylester-Phase wies noch einen Restgehalt von 420 ppm H₃PW₁₂O₄₀ auf. Anschließend wurde die organische Phase mit 20 g Aktivkohle (Merck) versetzt und 4 Stunden bei Raumtemperatur geschüttelt. Im nach Abtrennung der Aktivkohle und Einengung im Vakuum erhaltenen Polycaprolacton lag der H₃PW₁₂O₄₀-Gehalt unter 1 ppm.

### Beispiele 3 - 11

Für die Beispiele 3 - 11 wurden jeweils 100 g einer THF/PolyTHF/HPA-Lösung eingesetzt, deren Zusammensetzung in Tab. I angegeben ist. Zu dieser Mischung wurde die als "Reinigungsverbindung" bezeichnete Heteroatom-haltige Verbindung gegeben, und nach 50 Stunden wurde der HPA-Restgehalt in der Mischung ermittelt. Alle Proben wurden anschließend mit 20 g Aktivkohle versetzt, 4 Stunden bei Raumtemperatur geschüttelt und dann bei 10 mbar/140 °C eingeengt. Die Analyse des so erhaltenen PolyTHF ergab einen HPA-Restgehalt von weniger als 1 ppm.

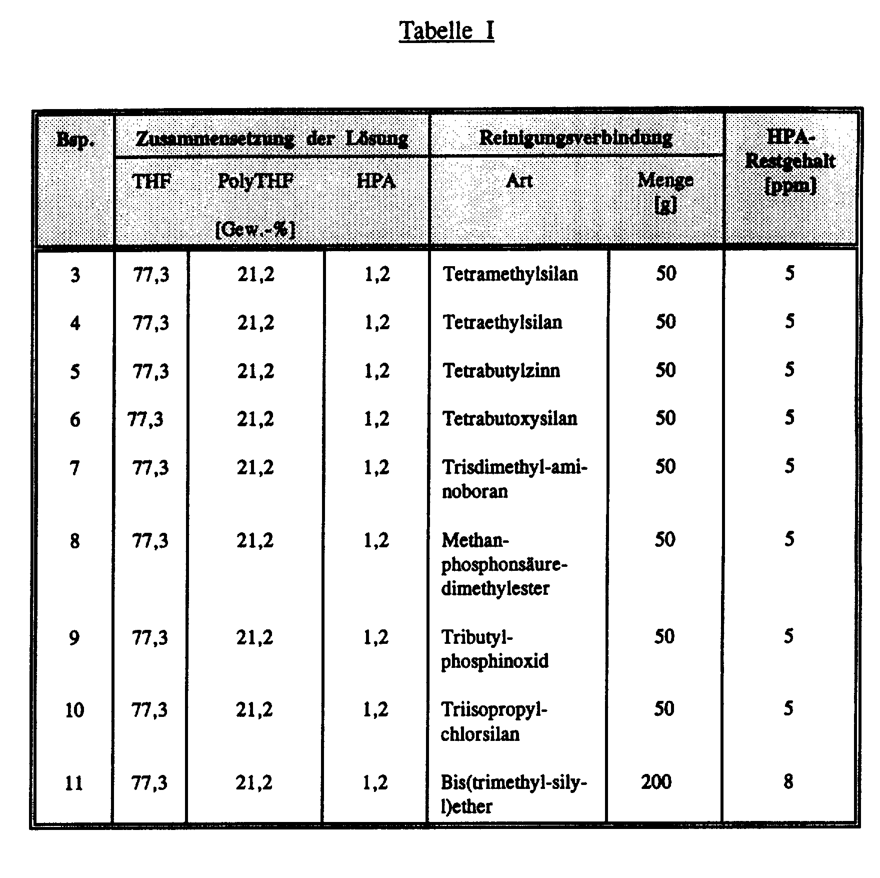

## Patentansprüche

1. Verfahren zur Entfernung von Heteropolysäuren und Heteropolysäuresalzen aus mit Heteropolysäuren und Heteropolysäuresalzen verunreinigten Polyethern, Polyestern und/oder Polyetherestern, dadurch gekennzeichnet, daß man die Polymere oder eine Lösung derselben mit einer Verbindung versetzt, die mindestens ein Heteroatom enthält, das aus der Gruppe von Zentralatomen von Heteropolysäuren ausgewählt ist, einen pKs-Wert von mindestens 20 aufweist und von so geringer Polarität ist, daß ihre Zugabe zur Abscheidung der Heteropolysäuren und Heteropolysäuresalze in einer gesonderten Phase führt, und die ausgefallene Heteropolysäuren- und Heteropolysäuresalz-Phase abtrennt.

2. Verfahren nach Anspruch 1, dadurch gekennzeichnet, daß das oder die Heteroatom(e) in der mindestens ein Heteroatom enthaltenden Verbindung ausgewählt ist (sind) aus B, Si, Ge, Sn, P, As, Sb, Se, Te, Ce, V, Cr, Mo, W, Mn und Ni.

3. Verfahren nach Anspruch 1 oder 2, dadurch gekennzeichnet, daß die mindestens ein Heteroatom enthaltende Verbindung nicht in ihrer höchsten Oxidationsstufe vorliegt.

4. Verfahren nach einem der Ansprüche 1 bis 3, dadurch gekennzeichnet, daß man mit einer Gewichtsmenge der mindestens ein Heteroatom enthaltenden Verbindung versetzt, die mindestens halb so groß wie die Gewichtsmenge anwesender anderer niedermolekularer Verbindungen ist oder mindestens 50% der Gewichtsmenge an anwesendem Polymer beträgt.

5. Verfahren nach einem der Ansprüche 1 bis 4, dadurch gekennzeichnet, daß eine Lösung der Polymere auf einen Polymergehalt von zumindest 10 Gew.-% eingeengt wird, bevor mit der mindestens ein Heteroatom enthaltenden Verbindung versetzt wird.

6. Verfahren nach einem der Ansprüche 1 bis 5, dadurch gekennzeichnet, daß man das Polymer nach Abtrennung der Heteropolysäuren- und Heteropolysäuresalz-Phase mit einem festen Adsorbens, das in der Lage ist, Heteropolysäuren und Heteropolysäuresalze zu adsorbieren, in Kontakt bringt.

7. Verfahren nach einem der Ansprüche 1 bis 6, dadurch gekennzeichnet, daß man als festes Adsorbens eines oder eine Mischung mehrerer aus den Gruppen Aktivkohlen, Aluminiumoxide, Erdalkalimetall- und Seltenerdmetalloxide, -hydroxide und -carbonate und basische Ionentauscher einsetzt.

8. Verfahren nach einem der Ansprüche 1 bis 7, dadurch gekennzeichnet, daß man nach der Entfernung der Heteropolysäuren und Heteropolysäuresalze das Polymer durch Abtrennen von Monomeren, Kettenabbruchsreagenzien, eventuell zugesetzten Lösungsmitteln und anderen niedrig siedenden Verbindungen erhält.

9. Verfahren nach einem der Ansprüche 1 bis 8, dadurch gekennzeichnet, daß man einen Polyoxytetramethylen-Gruppen enthaltenden Polyether einsetzt.

10. Verfahren nach einem der Ansprüche 1 bis 9, dadurch gekennzeichnet, daß die abgetrennte Heteropolysäuren- und Heteropolysäuresalz-Phase als Polymerisationskatalysator wiederverwendet wird.

## Claims

1. A process for removing heteropolyacids and heteropolyacid salts from polyethers, polyesters and/or polyether esters which are contaminated with heteropolyacids and heteropolyacid salts, which comprises admixing the polymers or a solution thereof with a compound which contains at least one heteroatom which is selected from the group consisting of central atoms of heteropolyacids, has a pKa value of at least 20 and is of a polarity so low that its addition leads to the heteropolyacids and heteropolyacid salts separating out in a separate phase, and separating off the precipitated heteropolyacid and heteropolyacid salt phase.

2. A process as claimed in claim 1, wherein the heteroatom(s) in the compound containing at least one heteroatom is (are) selected from B, Si, Ge, Sn, P, As, Sb, Se, Te, Ce, V, Cr, Mo, W, Mn and Ni.

3. A process as claimed in claim 1 or 2, wherein the compound containing at least one heteroatom is not present in its highest oxidation state.

4. A process as claimed in one of claims 1 to 3, wherein an amount by weight of the compound containing at least one heteroatom is added which is at least half as much as the amount by weight of other low-molecular weight compounds present or is at least 50% of the amount by weight of polymer present.

5. A process as claimed in one of claims 1 to 4, wherein a solution of the polymers is concentrated to a polymer content of at least 10% by weight before it is admixed with the compound containing at least one heteroatom.

6. A process as claimed in one of claims 1 to 5, wherein, after separating off the heteropolyacid and heteropolyacid salt phase, the polymer is contacted with a solid adsorbent which is capable of adsorbing heteropolyacids and heteropolyacid salts.

7. A process as claimed in one of claims 1 to 6, wherein the solid adsorbent used is one, or a mixture of a plurality, selected from the groups activated carbons, aluminum oxides, alkaline earth metal and rare earth metal oxides, hydroxides and carbonates and basic ion exchangers.

8. A process as claimed in one of claims 1 to 7, wherein, after removing the heteropolyacids and heteropolyacid salts, the polymer is obtained by separating off monomers, chain termination reagents, any solvents added and other low-boiling compounds.

9. A process as claimed in one of claims 1 to 8, wherein a polyether containing polyoxytetramethylene groups is used.

10. A process as claimed in one of claims 1 to 9, wherein the heteropolyacid and heteropolyacid salt phase separated off is reused as polymerization catalyst.

## Revendications

1. Procédé pour éliminer des hétéropolyacides et des sels d'hétéropolyacide de polyéthers, polyesters, et/ou polyétheresters contaminés par des hétéropolyacides et sels d'hétéropolyacide, caractérisé en ce qu'on mélange les polymères ou une solution de ceux-ci avec un composé qui contient au moins un hétéroatome choisi dans le groupe des atomes centraux d'hétéropolyacides, possède une valeur de pKs d'au moins 20 et qui est d'une si faible polarité que son addition conduit à la séparation des hétéropolyacides et sels d'hétéropolyacide dans une phase particulière, et qui sépare la phase précipitée d'hétéropolyacides et de sels d'hétéropolyacide.

2. Procédé selon la revendication 1 caractérisé en ce que le ou les hétéroatomes dans le composé contenant au moins un hétéroatome sont choisis parmi B, Si, Ge, Sn, P, As, Sb, Se, Te, Ce, V, Cr, Mo, W, Mn et Ni.

3. Procédé selon la revendication 1 ou 2, caractérisé en ce que le composé contenant au moins un hétéroatome n'est pas présent dans son état d'oxydation le plus élevé.

4. Procédé selon l'une quelconque des revendications 1 à 3, caractérisé en ce que l'on mélange une quantité en poids du composé contenant au moins un hétéroatome, qui est au moins la moitié de la quantité en poids des autres composés de faible masse moléculaire présents ou qui représente au moins 50% de la quantité en poids de polymère présent.

5. Procédé selon l'une quelconque des revendications 1 à 4, caractérisé en ce qu'on concentre une solution des polymères jusqu'à une teneur en polymère d'au moins 10% en poids, avant de la mélanger avec le composé contenant au moins un hétéroatome.

6. Procédé selon l'une quelconque des revendications 1 à 5, caractérisé en ce que, après séparation de la phase des hétéropolyacides et des sels d'hétéropolyacide, l'on met le polymère en contact avec un adsorbant solide qui est capable d'adsorber les hétéropolyacides et les sels d'hétéropolyacide.

7. Procédé selon l'une quelconque des revendications 1 à 6, caractérisé en ce que l'on utilise en tant qu'adsorbant solide, un élément ou un mélange de plusieurs éléments parmi les groupes des carbones actifs, des oxydes d'aluminium, des oxydes, hydroxydes et carbonates des métaux alcalino-terreux et des métaux des terres rares, et des échangeurs d'ions basiques.

8. Procédé selon l'une quelconque des revendications 1 à 7, caractérisé en ce que l'on obtient le polymère, après élimination des hétéropolyacides et des sels d'hétéropolyacide, en le séparant des monomères, des réactifs de clivage de chaîne, d'éventuels solvants ajoutés et d'autres composés à faible point d'ébullition.

9. Procédé selon l'une quelconque des revendications 1 à 8, caractérisé en ce que l'on met en oeuvre un polyéther contenant des groupes polyoxytétraméthylène.

10. Procédé selon l'une quelconque des revendications 1 à 9, caractérisé en ce que la phase séparée des hétéropolyacides et des sels d'hétéropolyacide est réutilisée comme catalyseur de polymérisation.
